# EUROPEAN PATENT SPECIFICATION

(11) **EP 4 204 798 B1**
(45) Date of publication and mention of the grant of the patent: **08.10.2025**
(21) Application number: 21859474.5
(22) Date of filing: 30.08.2021
(51) Int. Cl.: G01N 27/904

(54) **FLAW IDENTIFICATION BY EDDY-CURRENT C-SCAN DATA MERGING**
FEHLERIDENTIFIKATION DURCH WIRBELSTROM-C-SCAN-DATENZUSAMMENFÜHRUNG
IDENTIFICATION DES DÉFAUTS PAR FUSION DE DONNÉES C-SCAN À COURANTS DE FOUCAULT

(30) Priority: 31.08.2020 US 202063072437 P
(43) Date of publication of application: 05.07.2023
(73) Proprietor: Evident Canada, Inc., Québec, QC G1P0B3 (CA)
(72) Inventor: LECLERC, Rémi, Quebec, Québec G1V 3K6 (CA)
(74) Representative: Noack, Andreas
(86) International application number: PCT/CA2021/051197
(87) International publication number: WO 2022/040812

(56) References cited:
- WO-A1-2009/093070
- US-A1- 2003 089 171
- US-A1- 2005 088 172
- US-A1- 2012 025 816
- US-A1- 2012 025 816
- US-A1- 2012 123 699
- US-B1- 6 220 099
- GUI YUN TIAN ET AL: "MULTIPLE SENSORS ON PULSED EDDY-CURRENT DETECTION FOR 3-D SUBSURFACE CRACK ASSESSMENT", IEEE SENSORS JOURNAL, IEEE, USA, vol. 5, no. 1, 1 February 2005 (2005-02-01), pages 90 - 96, XP001226908, ISSN: 1530-437X, DOI: 10.1109/JSEN.2004.839129

## Description

### CROSS-REFERENCE TO RELATED APPLICATION

This application claims the benefit of priority to U.S. Provisional Patent Application Serial No. 63/072,437, filed August 31, 2020.

### TECHNICAL FIELD

The present disclosure generally relates to non-destructive surface inspection.

### BACKGROUND

Non-destructive inspection techniques can be used to inspect components, such as, but not limited to, a pressure vessel, an aircraft wing, an aircraft fuselage, a rail for railroad use, a railcar wheel, or other types of components. For some conductive materials, eddy current array (ECA) probes can be used for inspection. In an ECA probe, alternating current is injected into one or more coils inside the ECA probe, generating a magnetic field. When the ECA probe is placed over an object-under-test, opposed alternating currents (referred to as eddy currents) are generated. Abnormalities in the object-under-test can disturb the path of the eddy currents, and this disturbance can then be detected and measured by the probe.

Using an ECA probe, a technician can scan the object-under-test and receive an indication that the ECA probe has encountered a disturbance. However, not all disturbances correspond to harmful defects. Some disturbances can be caused by non-harmful abnormalities. For example, a scab, which is the result of excess materials building on a surface during a rolling process leaving a circular-type mark on the surface, can often trigger a disturbance. But a scab may not be considered an unacceptable defect. Thus, in response to receiving a defect indication, the technician may go back and verify the cause of the notification by re-scanning the area at different angles and then further considering whether the cause of the defect indication is an unacceptable defect or not. This can lead to a protracted and sometimes error-prone inspection process.

### BRIEF DESCRIPTION OF THE DRAWINGS

Various ones of the appended drawings merely illustrate example implementations of the present disclosure and should not be considered as limiting its scope.
FIG. 1 illustrates an ECA probe.
FIG. 2 illustrates an inspection system, according to an example of the present subject matter.
FIG. 3 illustrates an inspection arrangement, according to an example of the present subject matter.
FIG. 4 is a flow diagram for an inspection process, according to an example of the present subject matter.
FIG. 5 illustrates pictorial representation of an inspection process, according to an example of the present subject matter.
FIG. 6 illustrates a block diagram of an example comprising a machine upon which any one or more of the techniques (e.g., methodologies) discussed herein may be performed.

### DETAILED DESCRIPTION

The inventor has recognized, among other things, a need in the art for an inspection system that overcomes the challenges discussed above. Examples of the present subject matter provide techniques for gathering inspection data (e.g., c-scan) from a plurality of probes, such as ECA probes. Each probe may generate inspection data obtained from different in-plane probe orientations on a surface, such as providing indications from disturbances or flaws located in different in-plane directions relative to a probe sensitivity axis. The inspection data may then be combined while indications at different orientations may be preserved and then merged to generate a composite. Pattern recognition using templates defining flaws or abnormalities may then be performed to determine the type of indication, e.g., detrimental flaw or non-detrimental abnormality. Thus, the systems and methods described herein provide fast inspection techniques while reducing errors.

This document describes a method comprising: receiving a first set of eddy-current inspection data providing disturbance indication data obtained in a first orientation relative to a first sensitivity axis; receiving a second set of eddy-current inspection data providing disturbance indication information in a second orientation relative to a second sensitivity axis, the second orientation being different from the first orientation; combining the first and second sets of inspection data to generate a combined data set preserving the disturbance indication data in the first and second orientations; and based on the combined data set, generating a composite of an abnormality.

This document also describes an inspection system. The inspection system may include a first probe configured to obtain a first set of eddy-current inspection data from an object, providing indication information in a first orientation relative to a first sensitivity axis. The inspection system may also include a second probe configured to obtain a second set of eddy-current inspection data from the object, providing indication information in a second orientation relative to a second sensitivity axis. The inspection system may further include a processor configured to combine to the first and second sets of eddy-current inspection data to generate a combined data set preserving the indication information in the first and second orientations and to merge indication information in the combined data set to generate a composite of an abnormality.

This document further describes a machine readable medium embodying instructions that, when executed by a machine, cause the machine to perform operations comprising: receiving a first set of eddy-current inspection data providing disturbance indication data obtained in a first orientation relative to a first sensitivity axis; receiving a second set of eddy-current inspection data providing disturbance indication information in a second orientation relative to a second sensitivity axis, the second orientation being different from the first orientation; combining the first and second sets of inspection data to generate a combined data set preserving the disturbance indication data in the first and second orientations; and based on the combined data set, generating a composite of an abnormality.

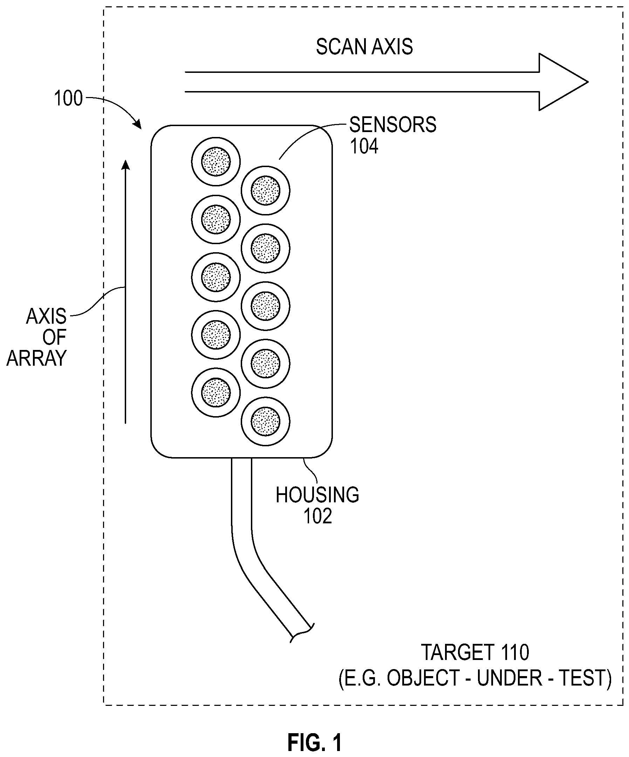

FIG. 1 illustrates an example of an ECA probe assembly 100 from a top view looking downward onto a surface of an object. The ECA probe assembly 100 may include a housing 102 and a plurality of sensors 104 disposed inside the housing 102. The ECA probe assembly 100 may be placed on or near a target 110 (e.g., object-under-test). The sensors 104 may include one or more coils and may be arranged in one or more rows inside the housing 102. The sensors 104 may be arranged in a pattern to avoid mutual inductance between the individual sensors. In the example of FIG. 1, the sensors 104 may be arranged in two adjacent rows parallel to an axis of array. The sensors in the first row may be offset or staggered so that the centers of the coils in the first row may be positioned in the spaces between the sensors in a second row to achieve optimized coverage of a scan path along the scan axis and to provide high resolution. The scan axis is defined by the movement of the sensors 104 along the target 110 during inspection. The sensors 104 may also be arranged in more than two rows.

In another example, the sensors 104 may be stacked on top of each other on respective printed circuit board (PCB) layers. In this example, the stacked sensors may be provided in one row. The PCB layers may be flexible or rigid.

During inspection, the ECA probe assembly 100 may be moved along the scan axis. While the ECA probe assembly 100 moves along the scan axis, the ECA probe assembly 100 may perform inspection of a surface, including a small area beneath the surface of the target 110. For example, it may inspect a few mm below the surface, depending on the material properties and the frequency and size of the sensors (e.g., for carbon steel around a few micrometers; for aluminum, approximately 5 mm). An alternating current may be injected into the coils to create magnetic field and opposing alternating current (eddy currents) are generated on the surface of the target 110. Higher frequencies (e.g., 50 kHz to 500 kHz) may be used to provide a higher resolution to detect smaller abnormalities; higher frequencies may result in comparatively less penetration into an area directly beneath the surface. Abnormalities in the part may disturb the path of the eddy currents, which may then be measured by the ECA probe assembly 100.

In an example, data from the probe assembly 100 may be multiplexed. Individual ones of the coils 104 may be excited at different times so as to not excite two adjacent coils at the same time. This may minimize mutual inductance, which is associated with magnetic coupling between coils.

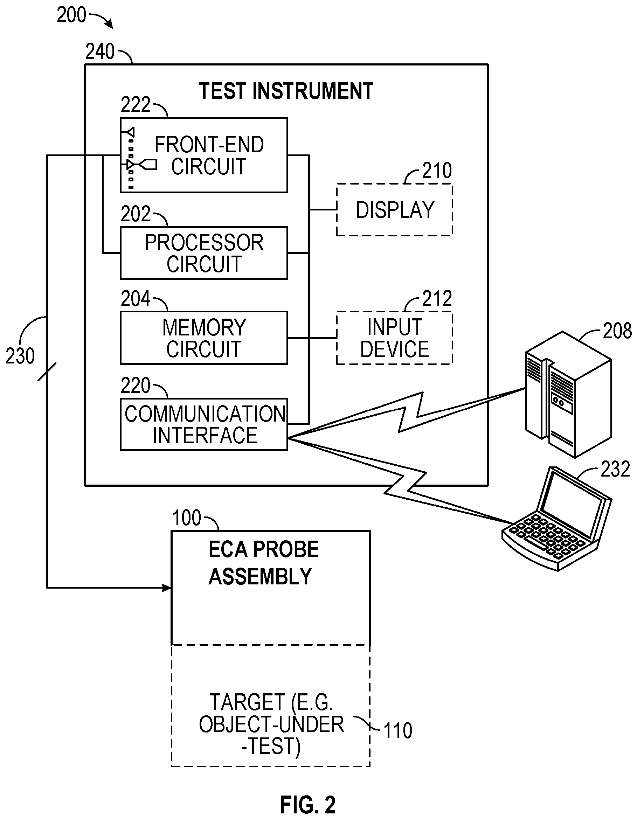

FIG. 2 illustrates generally an example comprising an inspection system 200, such as can be used to perform one or more techniques showed and described elsewhere herein. The inspection system 200 may include a test instrument 240, such as a hand-held or portable assembly. The test instrument 240 may be electrically coupled to a probe assembly 100, such as using a multi-conductor interconnect 230. The ECA probe assembly 100 may be provided as described above with reference to FIG. 1.

The test instrument 240 can include digital and analog circuitry, such as a front-end circuit 222 including one or more transmit and receive signal chains. The transmit signal chain can include amplifier and filter circuitry, such as to provide altermatic currents for delivery through an interconnect 230 to the ECA probe assembly 100 for inspection.

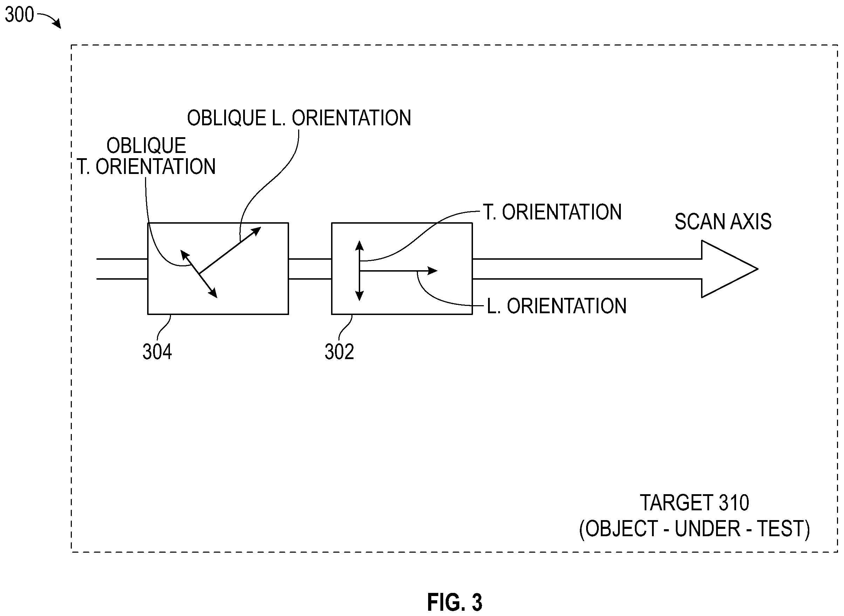

While FIG. 2 shows a single ECA probe assembly 100, other configurations may be used, such as multiple probe assemblies connected to a single test instrument 240 for tandem inspection, such as the inspection processes described below with reference to FIGS. 3-5. Moreover, an inspection protocol may be performed using coordination between multiple test instruments 240, such as in response to an overall test scheme established from a master test instrument 240, or established by another remote system such as a compute facility 208 or general purpose computing device such as a laptop 232, tablet, smart-phone, desktop computer, or the like. The test scheme may be established according to a published standard or regulatory requirement and may be performed upon initial fabrication or on a recurring basis for ongoing surveillance, as illustrative examples.

The front-end circuit 222 can be coupled to and controlled by one or more processor circuits, such as a processor circuit 202 included as a portion of the test instrument 240. The processor circuit can be coupled to a memory circuit, such as to execute instructions that cause the test instrument 240 to perform one or more of coil excitation, signal acquisition, processing, or storage of data relating to inspection, or to otherwise perform techniques as shown and described herein. The test instrument 240 can be communicatively coupled to other portions of the system 200, such as using a wired or wireless communication interface 220.

For example, performance of one or more techniques as shown and described herein can be accomplished on-board the test instrument 240 or using other processing or storage facilities such as using a compute facility 208 or a general-purpose computing device such as a laptop 232, tablet, smart-phone, desktop computer, or the like. For example, processing tasks that would be undesirably slow if performed on-board the test instrument 240 or beyond the capabilities of the test instrument 240 can be performed remotely (e.g., on a separate system), such as in response to a request from the test instrument 240. Similarly, storage of inspection data or intermediate data such as c-scan matrices can be accomplished using remote facilities communicatively coupled to the test instrument 240. The test instrument can include a display 220, such as for presentation of configuration information or results, and an input device 222 such as including one or more of a keyboard, trackball, function keys or soft keys, mouse-interface, touch-screen, stylus, voice, gestures, or the like, for receiving operator commands, configuration information, or responses to queries.

FIG. 3 illustrates an inspection arrangement 300, according to an example of the present subject matter. FIG. 3 is a top view looking downward onto a surface of an object. The inspection arrangement 300 may include a first probe 302, a second probe 304, and a target 310 (e.g., object-under-test). The first and second probes 302, 304 may be provided as ECA probes as described above (e.g., ECA probe assembly 100). The first and second probes 302 may be positioned on or near a surface of the target 310. The target 310, for example, may be a rail, a pipe, or another component to be inspected. A probe sensitivity axis of first probe 302 may be positioned in a first position. For example, it may be positioned at a normal position to the scan axis, e.g., the axis of the array is perpendicular to the scan axis.

The first and second probes 302, 304 are provided as directional sensors; thus, they may detect abnormalities in predefined orientations based on their respective sensitivity axes. The first probe 302 may be configured to detect attributes or abnormalities (e.g., disturbances in the eddy currents) in two directions: a longitudinal orientation (L. Orientation) and transverse orientation (T. Orientation) relative to the scan axis. That is, the longitudinal orientation may be parallel to the scan axis, and the transverse orientation may be perpendicular to the scan axis; hence the longitudinal and transverse orientations may be orthogonal to each other.

The second probe 304 may be located on or near the surface of the target 310. For example, the second probe 304 may be positioned adjacent the first probe 302 relative to the scan axis. The probe sensitivity axis of second probe 304 may be arranged in a second position, which may be different than the first position of the first probe 302. For example, the probe sensitivity axis of the second probe 304 may be positioned at an oblique angle (e.g., not normal) relative to the scan axis. For example, the probe sensitivity axis of the second probe 304 may be positioned at approximately 45° angle relative to the scan axis. The second probe 302 may be configured to detect attributes or abnormalities (e.g., disturbances in the eddy currents) in two orientations: an oblique longitudinal orientation and an oblique transverse orientation relative to the scan axis.

As described above, the first and second probes 302, 304 are coupled to one or more test instruments to perform tandem inspection. Moreover, FIG. 3 illustrates two probes for illustration purposes and more than two probes may be provided to perform tandem inspection; each probe's sensitivity axis may be positioned at different angles relative to the scan axis to detect attributes or abnormalities in different orientations.

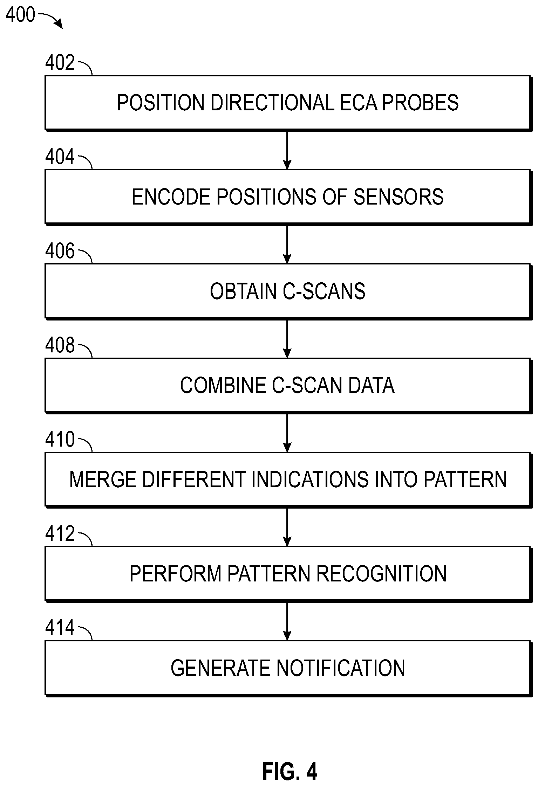

FIG. 4 is a flow diagram of an inspection process 400, according to an example of the subject matter. The inspection process 400 may be performed using the inspection components described above (e.g., inspection arrangement 300). At 402, two or more directional ECA probes may be positioned on or near the surface of an object-under-test. The two or more ECA probes may be positioned at different sensitivity angles relative to the scan axis. As discussed above, each ECA probe may detect abnormalities in two orientations (e.g., a longitudinal and transverse orientation relative to the probe's sensitivity axis).

At 404, position of the sensors (e.g., coils) within the ECA probes may be determined and encoded into the system. For example, if the sensors are arranged in a plurality of rows, position of the sensors relative to each other may be determined and encoded. That is because the sensors in different rows may detect the same abnormality (e.g., a transverse-type abnormality) at different times. Sensors in the front row may detect the abnormality before the sensors in the back row. The encoded position information of the sensors may be used to re-align the sensor data.

At 406, inspection data, such as c-scan data, from the ECA probes may be received. The c-scan data from the probes may be normalized data based on reference data for the object-under-test. The reference data may have been obtained from a prior calibration process, a manufacturing specification, or other suitable source. The c-scan data for each ECA probe may include detected abnormalities (e.g., indications) in two orientations, as described above. The c-scan data may be provided as a two-dimensional surface map. The c-scan data may be captured while the target is moving, for example along a conveyer belt.

At 408, the c-scan data from the ECA probes may be combined. If one or more sets of c-scan data include indications, the c-scan data may be combined in a manner to preserve the indications, including the orientations of the indications. For example, based on the indications, the sensitivity axis of each of the probes (e.g., two probes) may be determined. Thus, an indication at a specific location may be classified as belong to an orientation along one of the four axes (e.g., longitudinal, transverse, oblique longitudinal, oblique transverse) by checking which probe shows a maximum absolute value, which will narrow it to two axis (e.g., either longitudinal or transverse, or oblique longitudinal or transverse), and by checking the sign of value, which will narrow it to one axis. When using more than two probes, the spatial positioning of the sensors may be determined and encoded to compare the indication for determining the appropriate location. The combination of c-scan data may include the accumulation (e.g., location summation) of the indications in each orientation detected by the ECA probes.

At 410, the different indications in the combined c-scan data may be merged together to generate a pattern. For example, the indications may be merged to form a continuous or semi-continuous line (e.g., for disjointed attributes). The merging may be performed based on a proximity threshold of different indications. For example, if one indication is located within a proximity threshold of another indication, the two indications may be merged together using interpolation or similar techniques to form the pattern.

At 412, pattern recognition may be performed on the generated pattern. Different patterns associated with different abnormalities (e.g., scabs, welding defect) may be stored in a memory. The generated pattern may be compared to the stored patterns to determine whether the generated pattern matches one of the stored patterns.

At 414, based on matching the generated pattern to a stored pattern, a notification may be generated. The notification may include an audible alarm. The notification may include a display to the user (e.g., technician), alerting the technician of the detected pattern and the matched abnormality. For example, the technician may be shown the generated pattern and be notified that the generated pattern matches the pattern of the matched abnormality (e.g., a scab). In another example, this step may be automated, and the notification may be internal to the system.

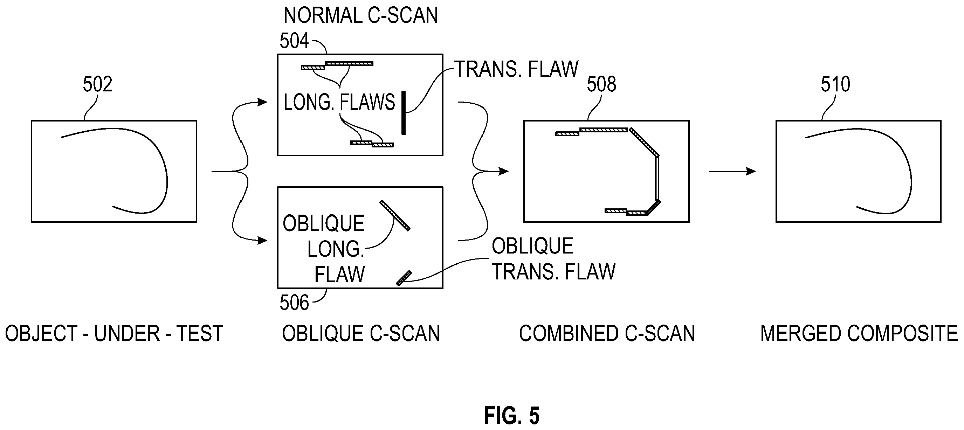

FIG. 5 illustrates a pictorial representation of an inspection process, according to an example of the subject matter. Picture 502 shows an abnormality on a surface of an object-under-test. As shown, the abnormality may be a hook shape. Next, different sets of inspection data (e.g., c-scans) may be obtained. Picture 504 shows a normal c-scan obtained from an ECA probe whose sensitivity axis is positioned normal to the scan axis. Picture 504 shows indications in transverse and longitudinal orientations relative to the scan axis.

Picture 506 shows an oblique c-scan obtained from an ECA probe whose sensitivity axis is positioned at an oblique angle to the scan axis. Picture 506 shows indications in two orientations: oblique transverse and oblique longitudinal orientations relative to the scan axis. Moreover, more than two scans may be obtained, each scan at a different angle relative to the scan axis. The c-scans may be obtained using separate probes or they may be obtained using the same probe that sequentially scans the surface at the specified angles.

Picture 508 shows a combined c-scan, which combines the indications in the individual c-scans in pictures 504, 506. As shown, picture 508 combines the indications in transverse and longitudinal orientations from picture 504 and indications in oblique transverse and oblique longitudinal orientations from picture 506.

Picture 510 shows a merged composite based on the combined c-scan, which may be generated by merging the different indications in the combined c-scan. The different indications may be merged into a continuous or semi-continuous line in a piece-wise manner or according to a spline technique or other analytical (e.g., parametric) model.

The merged composite may be stored and displayed to the technician. The merged composite is also compared to stored patterns (e.g., pattern templates) corresponding to different abnormality types. If a match is found, the technician may be notified of the match and the corresponding abnormality of the matched pattern. For example, merged composite of picture 510 may be matched to a stored pattern for a scab; therefore, the technician may be notified that a scab was detected.

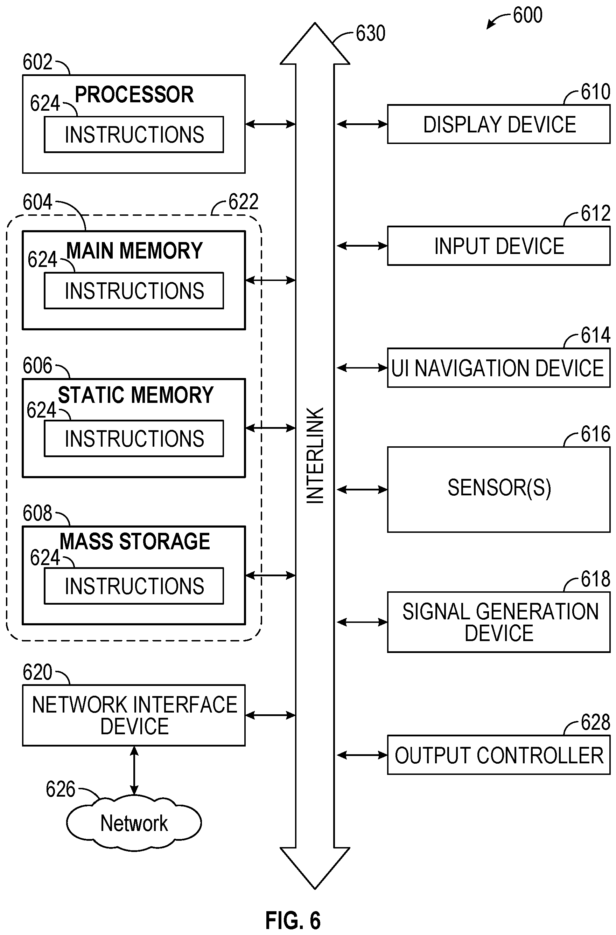

The techniques shown and described in this document can be performed using a portion or an entirety of an inspection system 200 as shown in FIG. 2 or otherwise using a machine 600 as discussed below in relation to FIG. 6. FIG. 6 illustrates a block diagram of an example comprising a machine 600 upon which any one or more of the techniques (e.g., methodologies) discussed herein may be performed. In various examples, the machine 600 may operate as a standalone device or may be connected (e.g., networked) to other machines. In a networked deployment, the machine 600 may operate in the capacity of a server machine, a client machine, or both in server-client network environments. In an example, the machine 600 may act as a peer machine in peer-to-peer (P2P) (or other distributed) network environment. The machine 600 may be a personal computer (PC), a tablet device, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate by, logic or a number of components, or mechanisms. Circuitry is a collection of circuits implemented in tangible entities that include hardware (e.g., simple circuits, gates, logic, etc.). Circuitry membership may be flexible over time and underlying hardware variability. Circuitries include members that may, alone or in combination, perform specified operations when operating. In an example, hardware of the circuitry may be immutably designed to carry out a specific operation (e.g., hardwired). In an example, the hardware comprising the circuitry may include variably connected physical components (e.g., execution units, transistors, simple circuits, etc.) including a computer readable medium physically modified (e.g., magnetically, electrically, such as via a change in physical state or transformation of another physical characteristic, etc.) to encode instructions of the specific operation. In connecting the physical components, the underlying electrical properties of a hardware constituent may be changed, for example, from an insulating characteristic to a conductive characteristic or vice versa. The instructions enable embedded hardware (e.g., the execution units or a loading mechanism) to create members of the circuitry in hardware via the variable connections to carry out portions of the specific operation when in operation. Accordingly, the computer readable medium is communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time.

Machine (e.g., computer system) 600 may include a hardware processor 602 (e.g., a central processing unit (CPU), a graphics processing unit (GPU), a hardware processor core, or any combination thereof), a main memory 604 and a static memory 606, some or all of which may communicate with each other via an interlink (e.g., bus) 608. The machine 600 may further include a display unit 610, an alphanumeric input device 612(e.g., a keyboard), and a user interface (UI) navigation device 614(e.g., a mouse). In an example, the display unit 610, input device 612and UI navigation device 614may be a touch screen display. The machine 600 may additionally include a storage device (e.g., drive unit) 608, a signal generation device 618(e.g., a speaker), a network interface device 620, and one or more sensors 616, such as a global positioning system (GPS) sensor, compass, accelerometer, or other sensor. The machine 600 may include an output controller 628, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 622may include a machine readable medium 608on which is stored one or more sets of data structures or instructions 624 (e.g., software) embodying or utilized by any one or more of the techniques or functions described herein. The instructions 624 may also reside, completely or at least partially, within the main memory 604, within static memory 606, or within the hardware processor 602 during execution thereof by the machine 600. In an example, one or any combination of the hardware processor 602, the main memory 604, the static memory 606, or the storage device 626 may constitute machine readable media.

While the machine readable medium 622 is illustrated as a single medium, the term "machine readable medium" may include a single medium or multiple media (e.g., a centralized or distributed database, and/or associated caches and servers) configured to store the one or more instructions 624.

The term "machine readable medium" may include any medium that is capable of storing, encoding, or carrying instructions for execution by the machine 600 and that cause the machine 600 to perform any one or more of the techniques of the present disclosure, or that is capable of storing, encoding or carrying data structures used by or associated with such instructions. Non-limiting machine-readable medium examples may include solid-state memories, and optical and magnetic media. Accordingly, machine-readable media are not transitory propagating signals. Specific examples of massed machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic or other phase-change or state-change memory circuits; magnetic disks, such as internal hard disks and removable disks; magneto-optical disks; and CD-ROM and DVD-ROM disks.

The instructions 624 may further be transmitted or received over a communications network 626 using a transmission medium via the network interface device 620 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.22 family of standards known as Wi-Fi^{®}, IEEE 802.26 family of standards known as WiMax^{®}), IEEE 802.25.4 family of standards, peer-to-peer (P2P) networks, among others. In an example, the network interface device 620 may include one or more physical jacks (e.g., Ethernet, coaxial, or phone jacks) or one or more antennas to connect to the communications network 626. In an example, the network interface device 620 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 600, and includes digital or analog communications signals or other intangible medium to facilitate communication of such software.

### Various Notes

Each of the non-limiting aspects above can stand on its own or can be combined in various permutations or combinations with one or more of the other aspects or other subject matter described in this document.

The above detailed description includes references to the accompanying drawings, which form a part of the detailed description. The drawings show, by way of illustration, specific implementations in which the invention can be practiced. These implementations are also referred to generally as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other implementations can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. The scope of the invention should be determined with reference to the appended claims, along with the full scope of equivalents to which such claims are entitled.

## Claims

1. A method comprising:
receiving a first set of eddy-current inspection data providing disturbance indication data obtained in a first orientation relative to a first sensitivity axis;
receiving a second set of eddy-current inspection data providing disturbance indication information in a second orientation relative to a second sensitivity axis, the second orientation being different from the first orientation;
combining the first and second sets of inspection data to generate a combined data set preserving the disturbance indication data in the first and second orientations; and
based on the combined data set, generating a composite of an abnormality;
the method further comprising:
comparing the composite to stored pattern information;
based on comparing the composite, generating a notification of a match;
wherein the notification includes information of a type of the abnormality matched with the composite.

2. The method of any of claims 1, wherein the first set of eddy-current inspection data is obtained using a first directional probe and the second set of eddy-current inspection data is obtained using a second directional probe, and wherein the first and second sets of eddy-current inspection data includes c-scan data.

3. The method of any of claims 1-2, further comprising:
encoding position information of sensors in the first and second directional probes.

4. The method of any of claims 1-3, wherein the first set of eddy-current inspection data further provides disturbance indication data obtained in a third orientation and second set of eddy-current inspection data providing disturbance indication data obtained in a fourth orientation,
wherein the first and third orientation are orthogonal to each other and the second and fourth orientation are orthogonal to each other.

5. The method of any of claims 1-4, wherein the first and second sets of eddy-current inspection data are obtained using eddy current array (ECA) probes.

6. An inspection system comprising:
a first probe (302) configured to obtain a first set of eddy-current inspection data from an object, providing indication information in a first orientation relative to a first sensitivity axis;
a second probe (304) configured to obtain a second set of eddy-current inspection data from the object, providing indication information in a second orientation relative to a second sensitivity axis; and
a processor (602) configured to combine to the first and second sets of eddy-current inspection data to generate a combined data set preserving the indication information in the first and second orientations and to merge indication information in the combined data set to generate a composite of an abnormality;
wherein the processor 602) is further configured to:
compare the composite to stored pattern information;
based on comparing the composite, generate a notification of a match;
wherein the notification includes information of a type of the abnormality matched with the composite.

7. The inspection system of claim 6, wherein the first and second probes (302, 304) include eddy current arrays.

8. The inspection system of any of claims 6-7, wherein the first and second probes (302, 304) are directional probes.

9. The inspection system of any of claims 6-8, wherein the processor (602) is further configured to encode position information of sensors in the first and second probes (302, 304).

10. The inspection system of any of claims 6-9, wherein the first set of eddy-current inspection data further provides indication information in a third orientation and second set of eddy-current inspection data providing indication information in a fourth orientation,
wherein the first and third orientation are orthogonal to each other and the second and fourth orientation are orthogonal to each other.

11. A machine readable medium embodying instructions that, when executed by a machine, cause the machine to perform the method of any of claims 1 to 5.

## Patentansprüche

1. Ein Verfahren, umfassend:
Empfangen eines ersten Satzes von Wirbelstromprüfungsdaten, die Störungsanzeigedaten liefern, die in einer ersten Ausrichtung relativ zu einer ersten Empfindlichkeitsachse erhalten wurden;
Empfangen eines zweiten Satzes von Wirbelstromprüfungsdaten, die Störungsanzeigeinformationen in einer zweiten Ausrichtung relativ zu einer zweiten Empfindlichkeitsachse liefern, wobei die zweite Ausrichtung sich von der ersten Ausrichtung unterscheidet;
Kombinieren des ersten und des zweiten Satzes von Prüfdaten, um einen kombinierten Datensatz zu erzeugen, der die Störungsanzeigedaten in der ersten und der zweiten Ausrichtung beibehält; und
auf der Grundlage des kombinierten Datensatzes Erzeugen einer Zusammensetzung einer Anomalie;
wobei das Verfahren weiterhin umfasst:
Vergleichen der Zusammensetzung mit gespeicherten Musterinformationen;
auf der Grundlage des Vergleichs der Zusammensetzung Erzeugen einer Benachrichtigung über eine Übereinstimmung;
wobei die Benachrichtigung Informationen über eine Art der Anomalie enthält, die mit der Zusammensetzung übereinstimmt.

2. Das Verfahren nach einem der Ansprüche 1, wobei der erste Satz von Wirbelstromprüfungsdaten unter Verwendung einer ersten Richtsonde und der zweite Satz von Wirbelstromprüfungsdaten unter Verwendung einer zweiten Richtsonde erhalten wird und wobei der erste und der zweite Satz von Wirbelstromprüfungsdaten C-Scan-Daten enthalten.

3. Das Verfahren nach einem der Ansprüche 1 bis 2, weiterhin umfassend:
Codieren von Positionsinformationen von Sensoren in der ersten und zweiten Richtsonde.

4. Das Verfahren nach einem der Ansprüche 1 bis 3, wobei der erste Satz von Wirbelstromprüfungsdaten weiterhin Störungsanzeigedaten liefert, die in einer dritten Ausrichtung erhalten wurden, und der zweite Satz von Wirbelstromprüfungsdaten Störungsanzeigedaten liefert, die in einer vierten Ausrichtung erhalten wurden,
wobei die erste und die dritte Ausrichtung orthogonal zueinander sind und die zweite und die vierte Ausrichtung orthogonal zueinander sind.

5. Das Verfahren nach einem der Ansprüche 1 bis 4, wobei der erste und der zweite Satz von Wirbelstromprüfungsdaten unter Verwendung von Wirbelstrom-Array-Sonden (ECA-Sonden) erhalten werden.

6. Ein Inspektionssystem, umfassend:
eine erste Sonde (302), die dazu eingerichtet ist, einen ersten Satz von Wirbelstromprüfungsdaten von einem Objekt zu erhalten, die Anzeigedaten in einer ersten Ausrichtung relativ zu einer ersten Empfindlichkeitsachse liefern;
eine zweite Sonde (304), die dazu eingerichtet ist, einen zweiten Satz von Wirbelstromprüfungsdaten von dem Objekt zu erhalten, die Anzeigedaten in einer zweiten Ausrichtung relativ zu einer zweiten Empfindlichkeitsachse liefern; und
einen Prozessor (602), der dazu eingerichtet ist, den ersten und den zweiten Satz von Wirbelstromprüfungsdaten zu kombinieren, um einen kombinierten Datensatz zu erzeugen, der die Anzeigeinformationen in der ersten und der zweiten Ausrichtung beibehält, und die Anzeigeinformationen in dem kombinierten Datensatz zusammenzuführen, um eine Zusammensetzung einer Anomalie zu erzeugen;
wobei der Prozessor (602) weiterhin eingerichtet ist zum:
Vergleichen der Zusammensetzung mit gespeicherten Musterinformationen;
auf der Grundlage des Vergleichs der Zusammensetzung Erzeugen einer Benachrichtigung über eine Übereinstimmung;
wobei die Benachrichtigung Informationen über einen Typ der Anomalie enthält, die mit der Zusammensetzung übereinstimmt.

7. Das Inspektionssystem nach Anspruch 6, wobei die erste und die zweite Sonde (302, 304) Wirbelstromanordnungen umfassen.

8. Das Inspektionssystem nach einem der Ansprüche 6-7, wobei die ersten und zweiten Sonden (302, 304) Richtsonden sind.

9. Das Inspektionssystem nach einem der Ansprüche 6-8, wobei der Prozessor (602) weiterhin eingerichtet ist zum Codieren von Positionsinformationen von Sensoren in den ersten und zweiten Sonden (302, 304).

10. Das Inspektionssystem nach einem der Ansprüche 6 bis 9, wobei der erste Satz von Wirbelstrom-Inspektionsdaten weiterhin Anzeigedaten in einer dritten Ausrichtung und der zweite Satz von Wirbelstrom-Inspektionsdaten Anzeigedaten in einer vierten Ausrichtung bereitstellt,
wobei die erste und die dritte Ausrichtung orthogonal zueinander sind und die zweite und die vierte Ausrichtung orthogonal zueinander sind.

11. Ein maschinenlesbares Medium, das Anweisungen enthält, die, wenn sie von einer Maschine ausgeführt werden, die Maschine veranlassen, das Verfahren nach einem der Ansprüche 1 bis 5 auszuführen.

## Revendications

1. Un procédé comprenant :
recevoir un premier ensemble de données d'inspection par courants de Foucault fournissant des données d'indication de perturbation obtenues dans une première orientation par rapport à un premier axe de sensibilité ;
recevoir un deuxième ensemble de données d'inspection par courants de Foucault fournissant des informations d'indication de perturbation dans une deuxième orientation par rapport à un deuxième axe de sensibilité, la deuxième orientation étant différente de la première orientation ;
combiner les premier et deuxième ensembles de données d'inspection pour générer un ensemble de données combinées conservant les données d'indication de perturbation dans les première et deuxième orientations ; et
sur la base de l'ensemble de données combinées, générer un composite d'une anomalie ;
le procédé comprenant en outre :
comparer le composite à des informations de modèle stockées ;
sur la base de la comparaison du composite, générer une notification d'une correspondance ;
dans lequel la notification comprend des informations sur un type d'anomalie correspondant au composite.

2. Le procédé selon l'une quelconque des revendications 1, dans lequel le premier ensemble de données d'inspection par courants de Foucault est obtenu à l'aide d'une première sonde directionnelle et le deuxième ensemble de données d'inspection par courants de Foucault est obtenu à l'aide d'une deuxième sonde directionnelle, et dans lequel les premier et deuxième ensembles de données d'inspection par courants de Foucault comprennent des données de scan C.

3. Le procédé selon l'une quelconque des revendications 1 à 2, comprenant en outre :
coder les informations de position des capteurs dans les première et deuxième sondes directionnelles.

4. Le procédé selon l'une quelconque des revendications 1 à 3, dans lequel le premier ensemble de données d'inspection par courants de Foucault fournit en outre des données d'indication de perturbation obtenues dans une troisième orientation et le deuxième ensemble de données d'inspection par courants de Foucault fournit des données d'indication de perturbation obtenues dans une quatrième orientation,
dans lequel la première et la troisième orientation sont orthogonales l'une à l'autre et la deuxième et la quatrième orientation sont orthogonales l'une à l'autre.

5. Le procédé selon l'une quelconque des revendications 1 à 4, dans lequel les premier et deuxième ensembles de données d'inspection par courants de Foucault sont obtenus à l'aide de sondes à réseau de courants de Foucault (ECA).

6. Un système d'inspection comprenant :
une première sonde (302) configurée pour obtenir un premier ensemble de données d'inspection par courants de Foucault à partir d'un objet, fournissant des informations d'indication dans une première orientation par rapport à un premier axe de sensibilité ;
une deuxième sonde (304) configurée pour obtenir un deuxième ensemble de données d'inspection par courants de Foucault à partir de l'objet, fournissant des informations d'indication dans une deuxième orientation par rapport à un deuxième axe de sensibilité ; et
un processeur (602) configuré pour combiner les premier et deuxième ensembles de données d'inspection par courants de Foucault afin de générer un ensemble de données combinées conservant les informations d'indication dans les première et deuxième orientations et pour fusionner les informations d'indication dans l'ensemble de données combinées afin de générer un composite d'une anomalie ;
dans lequel le processeur (602) est en outre configuré pour :
comparer le composite à des informations de modèle stockées ;
sur la base de la comparaison du composite, générer une notification d'une correspondance ;
dans lequel la notification comprend des informations sur un type d'anomalie correspondant au composite.

7. Le système d'inspection selon la revendication 6, dans lequel les première et deuxième sondes (302, 304) comprennent des réseaux de courants de Foucault.

8. Le système d'inspection selon l'une quelconque des revendications 6 à 7, dans lequel les première et deuxième sondes (302, 304) sont des sondes directionnelles.

9. Le système d'inspection selon l'une quelconque des revendications 6 à 8, dans lequel le processeur (602) est en outre configuré pour coder des informations de position de capteurs dans les première et deuxième sondes (302, 304).

10. Le système d'inspection selon l'une quelconque des revendications 6 à 9, dans lequel le premier ensemble de données d'inspection par courants de Foucault fournit en outre des informations d'indication dans une troisième orientation et le deuxième ensemble de données d'inspection par courants de Foucault fournit des informations d'indication dans une quatrième orientation,
dans lequel la première et la troisième orientation sont orthogonales l'une par rapport à l'autre et la deuxième et la quatrième orientation sont orthogonales l'une par rapport à l'autre.

11. Un médium lisible par machine contenant des instructions qui, lorsqu'elles sont exécutées par une machine, amènent la machine à exécuter le procédé selon l'une quelconque des revendications 1 à 5.
